# EUROPEAN PATENT APPLICATION

(11) **EP 1 153 816 A1**
(43) Date of publication of application: **14.11.2001**
(21) Application number: 00972919.5
(22) Date of filing: 08.11.2000
(51) Int. Cl.: B62B 5/00

(54) **SELF-PROPELLED CART USABLE IN SUPERMARKETS AND THE LIKE**

(30) Priority: 16.11.1999 ES 9902889 U
(71) Applicant: Gonzalez Serrano, Martin Blas, 28006 Madrid (ES)
(72) Inventor: Gonzalez Serrano, Martin Blas, 28006 Madrid (ES)
(74) Representative: Lahidalga de Careaga, Jose Luis
(86) International application number: ES0000428
(87) International publication number: WO0136248

(57) **Abstract**

Self-propelled cart that can be used as a cart for supermarkets and the like consisting of a cart equipped with a motor (6) mounted on one of the axles thereof, said motor being an electrical motor powered by a rechargeable battery (7) and having a male plug (9) that can be connected to a female plug (11). Said battery (7) can be connected to another similar battery of an adjacent cart.

## Description

### OBJECT OF THE INVENTION

The present specification refers to a self-propelled trolley applicable as a supermarket trolley and the like, the purpose of which is based on it being configured as a conventional trolley of those destined to be used for the transportation of goods that in a gradual manner are removed by the user from the shelves found in an establishment dedicated to selling goods, like a supermarket or in large shopping centres, which presents a conventional configuration with regards to its shape and capacity, having in the lower part and supported over the front or rear axle, a friction motor that together with a battery that supplies power to the motor, and which connects and disconnects by means of the movement of the directional handlebar, produce a movement or self-propelling of samé in accordance with the action of the motor, fastened to the axle tied to the wheels producing a gradual movement of same, obviating the pushing of the trolley by the user.

### FIELD OF THE INVENTION

This invention has its application within the industry dedicated to the manufacturing of self-propelled vehicles with special applications, likewise being able to be used in the industry dedicated to the manufacturing of furniture and implements for supermarkets and large shopping centres.

### BACKGROUND OF THE INVENTION

The applicant has knowledge of the current existence of a large number of trolleys that can be applied to be used as auxiliary vehicles for the transportation of goods inside supermarkets and large shopping centres, the applicant also knows the use of trolleys of an appropriate structure but with a purpose similar to that applicable within railway stations, bus stations and airports.

The applicant has knowledge of the use of trolleys with an appropriate configuration applicable so as to allow for the transportation of clubs, balls and auxiliary elements during golf competitions, accompanying the players when they move about the greens, with the aim of finalising a round of, for example, 18 holes.

These vehicles are hauled in a general manner through the use of support wheels that in collaboration with an appropriate chassis allow the user to transport various objects, and in specific applications, as can be the clubs for a game of golf.

Except for the existence of a trolley for the transport of clubs that counts with a conventional battery, implemented with a photovoltaic cell or solar panel, that furnishes a continuous charge to the battery, that is incorporated to the trolley with the object of facilitating the transportation of the clubs, for being the battery incorporated in collaboration with a small motor that acts on the wheels.

However, the applicant does not have knowledge of the existence at present of a self-propelled trolley applicable as a trolley for supermarkets and the like, provided with the special condition of presenting a motor powered by electrical energy that stems from a rechargeable battery, having the trolley in question conventional recharging means, even during the stand-by stages in the storage "boxes".

### DESCRIPTION OF THE INVENTION

The self-propelled trolley proposed by the invention, applicable as a supermarket trolley and the like, is an evident novelty within its specific field of application, having a plurality of advantages with respect to the conventional trolleys, allowing the continuous recharging of the battery incorporated as a nexus for the powering of the motor, even when the trolley is found to be in stand-by mode in the storage or pickup boxes.

In a more concrete manner, the self-propelled trolley applicable as a supermarket trolley and the like that is the object of the invention, includes a body constituting the loading area of the trolley, configured as a chassis, structure or frame, provided in the back part with the pertinent legs with wheels, incorporating a moveable handlebar that has the pertinent means to return to a determined position, in which the handlebar is in a position in collaboration with articulated bars connected to the motor situated in the lower part, concretely coinciding with the front or rear axle, which activates or deactivates the electrical power to the motor depending on the position of the handlebar, being the motor powered by electrical energy when the user moves the handlebar in a vertical descending position, the trolley automatically moving due to the action generated by the motor over the axle fixed to the wheels.

At the moment in which the user of the trolley wishes to effect the acquisition of a product, liberates the handlebar and this in accordance with the springs that help same towards a determined position generates the power disconnection to the motor, automatically stopping the trolley.

To be able to feed the power into the rechargeable battery, an installation has been foreseen over the structure itself of the trolley presenting a pin connection in the front area and a plug receptacle connection in the back area, achieving that when the trolley is situated in line in the boxes, the pin connection element penetrates into the plug receptacle connection element of the adjacent trolley receiving the electrical energy that flows from the connection effected by a similar trolley situated at the front of the line, that is connected to a powering element situated in the containing wall, wall, face of the wall, post, etc.

The adjacent trolley is introduced by the pin electrical socket into the plug receptacle socket and receives energy from the same point that it is received by this stored trolley.

### DESCRIPTION OF THE DRAWINGS

To complement the description that is being carried out and with the object of helping in a better understanding of the features of the invention, attached to the specification, as an integral part of same, is a set of drawings, where, purely for illustrative purposes and not limiting, the following is shown:
Figure number 1.- Shows a side elevated view of the self-propelled trolley applicable as a supermarket trolley and the like that is the object of this invention.
Figure number 2.- Shows a front elevated view, concretely from the area that carries the handlebar that acts over the object represented in figure number 1.

### PREFERRED EMBODIMENT OF THE INVENTION

Viewing these drawings, we can observe how the self-propelled trolley applicable as a supermarket trolley and the like (1), is constituted from a structure or basket (2), in the inside of which are stored the goods that are gradually introduced by the user, basket that may be substituted by a platform in case that the self-propelled trolley (1) is configured as a trolley applicable for the transportation of luggage, baggage, etc., installed over a zone destined for a bus station, train station, airports, etc., the body (2) showing in the lower part conventional support legs provided with two pairs of wheels (10) and (10'), and incorporating in one of the ends a guiding handlebar (3) capable of being moved in a vertical descending direction, although provided with adequate elements to recover a determined position in the event that no pressure whatsoever is effected over the body of this handlebar that is situated transversally, the handlebar (3) being linked to bars (4) and (5) that articulated amongst themselves generate the current outlet or not of the motor (6) from a battery (7) of rechargeable nature, being linked to the motor (7) at the axle of the front wheels (10') or rear (10) and the battery (7) presenting a connection (8) to a pin socket (9) and incorporating a plug receptacle socket (11) in the opposite area, with the object that when the trolley (1) is fixed in the boxer, the pin element emerging from the socket (9) is introduced in a plug receptacle socket (11) situated in the adjacent trolley, or introduced in a general electrical current socket obtaining a charge, not only of the battery (7) of the connected trolley, but also of all the line of trolleys receiving electrical energy for the simultaneous recharging of their batteries (7) by means of the interconnection (8) that communicates the pin socket (9) with the plug receptacle socket (11).

When moved by the user in a descending vertical direction the handlebar (3) generates the movement of the bars (4) and (5) putting the motor (6) into operation, being the motor (6) left without energy when the handlebar (3), lacking pressure from the part of the user, recovers its stand-by position, dragging the bars (4) and (5) and disconnecting the energy or electrical socket from the motor (6).

It is not considered necessary that this description be broader for any expert to understand the scope of the invention and the advantages that are derived from same.

The materials, form, size and arrangement of the elements are susceptible of variations, as long as this does not imply an alteration of the scope of the invention.

The terms used to describe this specification must be always taken in their broadest meaning and not limiting.

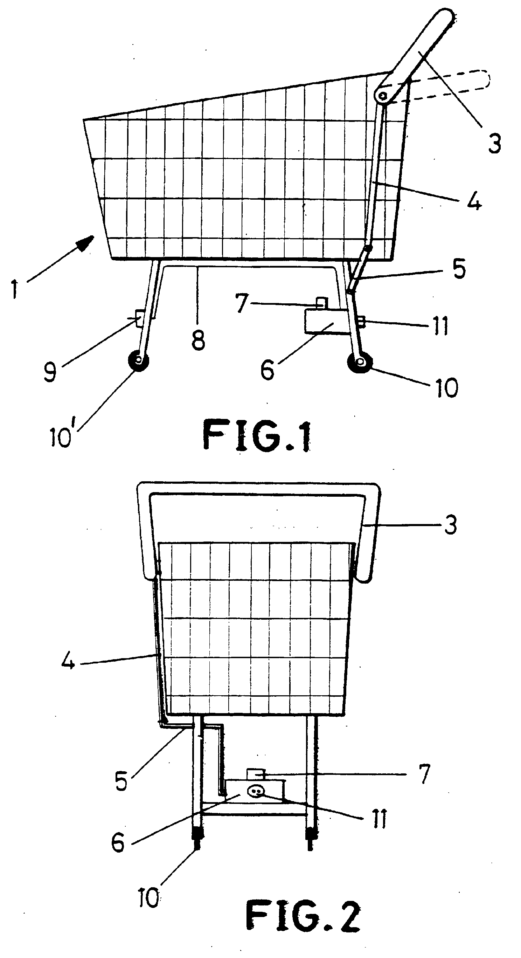

## Claims

1. Self-propelled trolley applicable as a supermarket trolley and the like, of those constituted from a basket (2), constitutive of the structure for the incorporation of goods, that can be substituted by a plane platform when it is applied for the transportation of luggage, having support legs provided with wheels (10) and (10'), and incorporating in one of the transversally situated ends a material or handle (3), **characterised by** being provided over one of its axles with a motor (6) that actuates the wheels fixed to the axle, the motor being electrical and powered by a rechargeable battery (7), which can receive its electrical power supply from a conventional source by means of a pin connector (9), the motor having in the back area a socket or plug receptacle connection (11) connected to the connection (8), by means of which an adjacent trolley provided with a pin connection (9) receives electrical energy for recharging its battery (7).

2. Self-propelled trolley applicable as a supermarket trolley and the like, in accordance with claim 1, **characterised in that** the battery (7) connected to the recharging cable (8), and this at the same time to the pin connector (9) and the plug receptacle connection (11), can power the battery (7) by means of the pin connector (9) when connecting and introducing this pin connector (9) into a conventional electrical current outlet that is connected to the electrical network.
